# FASCICULE DE BREVET EUROPEEN

(11) **EP 1 864 859 B1**
(45) Date de publication et mention de la délivrance du brevet: **16.03.2016**
(21) Numéro de dépôt: 07290673.8
(22) Date de dépôt: 29.05.2007
(51) Int. Cl.: B60Q 3/02, B60Q 1/30

(54) **Dispositif d'éclairage intérieur multifonctions pour véhicule automobile**
Multifunktionsvorrichtung zur Innenbeleuchtung für Kraftfahrzeug
Multifunctional interior lighting device for an automobile vehicle

(30) Priorité: 02.06.2006 FR 0604965
(43) Date de publication de la demande: 12.12.2007
(73) Titulaire: VALEO VISION, 93012 Bobigny Cedex (FR)
(72) Inventeur: Geoffroy, Eric, 81200 Mazamet (FR); Monnot, Jérôme, 81660 Pont de l'Arn (FR); Andrieu, Michel, 81660 Pont de l'Arn (FR)
(74) Mandataire: Schaffner, Jean

(56) Documents cités:
- EP-A- 1 376 708
- EP-A- 1 493 621
- EP-A- 1 582 405
- EP-A1- 1 431 158
- EP-A1- 1 839 946
- EP-A2- 1 293 380
- FR-A1- 2 720 039
- JP-A- 2003 127 769
- US-A1- 2003 001 406
- US-A1- 2003 133 307
- US-A1- 2003 209 531
- US-A1- 2004 208 013
- US-A1- 2005 219 855

## Description

La présente invention a pour objet un dispositif d'éclairage, utilisant des diodes électroluminescentes, destiné à être utilisé à l'intérieur des véhicules automobiles.

L'invention a essentiellement pour but de proposer une solution notamment pour réduire des coûts de fabrication des dispositifs d'éclairage qui sont présents à l'intérieur des véhicules automobiles, essentiellement en regroupant différentes fonctions d'éclairage intérieur dans un unique dispositif d'éclairage.

Le domaine de l'invention est, d'une façon générale, celui de l'éclairage et de la signalisation appliqué aux véhicules automobiles. Dans ce domaine, on connaît différents types de dispositifs faisant intervenir des diodes électroluminescentes, ou LEDs, parmi lesquels on trouve essentiellement les dispositifs suivants:
- des dispositifs d'éclairage situés à l'arrière du véhicule avec, notamment, les feux de recul ;
- des dispositifs de signalisation situés à l'avant (ou sur le côté) du véhicule avec, notamment, des indicateurs de direction, des rappels de clignotants, et des D.R.L. (Daytime Running Light, en terme anglo-saxon) ou phares de jour ;
- des dispositifs de signalisation situés à l'arrière du véhicule avec, notamment, des feux antibrouillards, des feux arrière, des indicateurs de direction et des feux stop, des feux "stop supérieur" ;
- des dispositifs d'éclairage intérieur avec notamment les plafonniers principaux (Avant, Central, Arrière), ou les modules éclairant allume-cigare ; des feux arrière de type feux stops surélevés, habituellement disposés dans une partie supérieure centrale des vitres centrales arrière, appartiennent également à la catégorie des dispositifs d'éclairage intérieur ;
- des dispositifs d'éclairage, intérieur ou extérieur, participant au style, avec par exemple des lignes de style éclairées sur les ailes du véhicule ou sur le tableau de bord, l'habillage de portières ou encore l'éclairage du pavillon de toit.

Pour l'ensemble de ces dispositifs, traditionnellement, on utilisait par le passé des sources lumineuses de type lampes classiques ou éventuellement des lampes halogènes. Mais depuis quelques années, les équipementiers automobiles ont proposé l'utilisation de LEDs, notamment pour les feux de signalisation. Les diodes électroluminescentes présentent un certain nombre d'avantages :
- tout d'abord, depuis longtemps, on sait que ce type de diodes ne rayonnent pas de façon omnidirectionnelle, mais rayonnent dans un demi-espace opposé à un substrat qui supporte la jonction P-N de la diode considérée ; ainsi, en utilisant un rayonnement plus directif que les lampes halogènes, ou à décharge, de l'état de la technique, la quantité d'énergie perdue est moins importante qu'avec les lampes à décharge ou halogènes ;
- ensuite, on a progressivement perfectionné ces diodes en terme d'intensité de rayonnement; elles peuvent désormais rayonner un flux d'environ 100 lumens. De plus, les diodes fabriquées émettent un rayonnement depuis longtemps dans le rouge, mais désormais également dans le blanc, ce qui accroît le champ de leurs utilisations envisageables. La quantité de chaleur qu'elles dégagent est relativement limitée, et un certain nombre de contraintes, liées à la dissipation de la chaleur dans les dispositifs projecteurs de l'état de la technique, disparaissent ;
- enfin, les diodes consomment moins d'énergie, même à intensité de rayonnement égal, que les lampes à décharge ou les lampes halogènes ; elles sont peu encombrantes, et leur forme particulière offre des possibilités nouvelles pour la réalisation et la disposition sur des surfaces complexes auxquelles elles sont destinées.

D'une façon générale, les diodes électroluminescentes sont disposées sur un support de type substrat (les plus connus dans le domaine automobile étant les substrats SMI, FR4, CEM1...), qui est, selon une définition générale, un matériau destiné à recevoir l'impression d'un circuit électronique, et/ou les différents composants constituant ce circuit, le tout formant une carte de circuit imprimé, ou PCB (pour Printed Circuit Board en langue anglaise). On peut désormais distinguer notamment trois types de diodes : les diodes dites à émission axiale, qui émettent un faisceau lumineux dans une direction principale sensiblement perpendiculaire au plan du PCB les supportant, les diodes dites à émission latérales, qui émettent un faisceau lumineux dans une direction parallèle au PCB les supportant, et les diodes à émission traversante, dites diodes "reverse gullwing" qui émettent de la lumière à travers le PCB.

Le document US2003/0133307 décrit un plafonnier pour véhicule automobile éclairant selon différentes directions et comprenant des LEDs.

L'objet de l'invention porte tout particulièrement sur les dispositifs d'éclairage intérieur. Dans l'état de la technique, chaque fonction d'éclairage intérieur, et plus particulièrement chaque fonction d'éclairage faisant intervenir des diodes électroluminescentes, est réalisée au moyen d'un dispositif d'éclairage spécifique dédié exclusivement à cette fonction. La plupart des fonctions considérées correspondent à une situation spécifique de vie à bord, telle que l'accueil, la conduite ou encore le repos. Le fait de disposer d'un dispositif d'éclairage spécifique entraîne un coût non négligeable dans la réalisation des fonctions d'éclairage intérieur.

Un problème général que cherche à résoudre l'invention est ainsi un problème de réduction de coût dans la réalisation des différentes fonctions d'éclairage intérieur. Pour répondre à ce problème, on propose, dans l'invention, de regrouper au sein d'un unique dispositif d'éclairage intérieur, différentes sources lumineuses de type LEDs qui sont aptes à réaliser au moins une première fonction d'éclairage intérieur et une deuxième fonction d'éclairage intérieur. A cet effet, les différentes LEDs sont réparties en au moins deux ensembles distincts, un premier ensemble étant dédié à la réalisation de la première fonction d'éclairage intérieur, et un deuxième ensemble étant dédié à la réalisation d'une deuxième fonction d'éclairage intérieur. On utilise des LEDs à émission traversante, et des LEDs à émission latérale pour réaliser respectivement la première fonction et la deuxième fonction.

L'invention concerne un dispositif d'éclairage pour véhicule automobile, selon les revendications 1 à 9, ainsi qu'un véhicule selon les revendications 10 à 11.

Le dispositif selon l'invention présente les caractéristiques suivantes :
- le premier ensemble de diodes électroluminescentes est constitué de diodes à émission traversante, et le deuxième ensemble de diodes électroluminescentes est constitué de diodes à émission latérale ;
- chaque diode électroluminescente d'un dit ensemble de diode électroluminescente émet directement dans la direction du faisceau lumineux de la fonction d'éclairage réalisée par ce dit ensemble de diode électroluminescente ;
- le module d'éclairage intérieur comporte une unique carte de circuit imprimé sur laquelle sont disposés le premier ensemble de diodes électroluminescentes et le deuxième ensemble de diodes électroluminescentes ;
- le premier ensemble de diodes électroluminescentes émet un faisceau lumineux global dans une première direction privilégiée, et le deuxième ensemble de diodes électroluminescentes émet un faisceau lumineux global dans une deuxième direction privilégiée différente de la première direction privilégiée.

Avantageusement,
- les diodes électroluminescentes du premier ensemble de diodes électroluminescentes émettent un faisceau lumineux d'une première intensité, et les diodes électroluminescentes du deuxième ensemble de diodes électroluminescentes émettent un faisceau lumineux d'une deuxième intensité inférieure à la première intensité ;
- les diodes électroluminescentes du premier ensemble de diodes électroluminescentes émettent un faisceau lumineux d'une première couleur, les diodes électroluminescentes du deuxième ensemble de diodes électroluminescentes émettent un faisceau lumineux d'une deuxième couleur différente de la première couleur ;
- le module d'éclairage intérieur comporte un unique écran de diffusion au travers duquel sont diffusés les faisceaux lumineux de la pluralité de source lumineuse ;
- le module d'éclairage comporte une surface de diffusion scindée par une partie occultante en au moins une première partie et une deuxième partie, la première partie assurant la diffusion de faisceaux lumineux réalisant la première fonction, la deuxième partie assurant la diffusion de faisceaux lumineux réalisant la deuxième fonction.

Selon l'invention:
- la première fonction correspond à une fonction d'éclairage habitacle à l'arrêt, et la deuxième fonction correspond à une fonction d'éclairage plafond ou bien
- la première fonction correspond à une fonction d'éclairage habitacle en conduite, et la deuxième fonction correspond à une fonction d'éclairage plafond ou bien
- la première fonction correspond à une fonction d'éclairage habitacle en conduite, et la deuxième fonction correspond à une fonction feu stop intérieur surélevé.

Selon un exemple non représentatif de l'nvention, la première fonction correspond à une fonction d'éclairage d'une bague éclairante d'allume-cigare, et la deuxième fonction correspond à une fonction d'éclairage cendrier ;
- la pluralité de source lumineuse du dispositif d'éclairage est disposée sur une carte de circuit imprimé unique, qui comprend une première et une deuxième patte de contact, la première patte de contact étant destinée à être en contact avec le corps d'un allume-cigare, ledit corps de l'allume-cigare correspondant ainsi à un potentiel de référence, et la deuxième patte étant destinée à être en contact avec le connecteur de l'allume-cigare, permettant ainsi d'appliquer une tension pour allumer la pluralité de sources lumineuses.

Selon certaines variantes de l'invention:
- la première fonction et la deuxième fonction sont activées simultanément ;
- la première fonction et la deuxième fonction sont activées de manière alternée.

La présente invention se rapporte également à un véhicule automobile équipé d'un dispositif d'éclairage comportant les caractéristiques principales et éventuellement une ou plusieurs caractéristiques complémentaires qui viennent d'être mentionnées, le dispositif d'éclairage étant par exemple positionné soit dans une partie centrale du plafond de l'habitacle du véhicule, soit au moins d'un côté de l'habitacle du véhicule.

L'invention et ses différentes applications seront mieux comprises à la lecture de la description qui suit et à l'examen des figures qui l'accompagnent. Celles-ci ne sont présentées qu'à titre indicatif et nullement limitatif.

Les figures montrent :
- à la figure 1A, une première vue en coupe d'un premier exemple de réalisation d'un dispositif d'éclairage intérieur;
- à la figure 1 B, une deuxième vue de côté d'un élément du premier exemple de réalisation de dispositif d'éclairage intérieur ;
- à la figure 2A, une première vue en coupe d'un deuxième exemple de réalisation d'un dispositif d'éclairage intérieur;
- à la figure 2B, une deuxième vue en coupe d'un élément du deuxième exemple de réalisation de dispositif d'éclairage intérieur ;
- à la figure 3, une vue en coupe d'un habitacle de véhicule automobile, équipé du premier exemple de réalisation de dispositif d'éclairage intérieur positionné latéralement de part et d'autre du plafond dudit habitacle ;
- à la figure 4, une vue en coupe du véhicule automobile, équipé du deuxième exemple de réalisation de dispositif d'éclairage intérieur positionné à proximité immédiate du centre du plafond de l'habitacle dudit véhicule ;
- à la figure 5, une représentation schématique d'un troisième exemple de réalisation de dispositif d'éclairage intérieu;
- à la figure 6, une représentation schématique d'un quatrième exemple de réalisation de dispositif d'éclairage adapté pour une bague d'allume cigare et un cendrier.

Les différents éléments apparaissant sur plusieurs figures auront gardé, sauf précision contraire, la même référence.

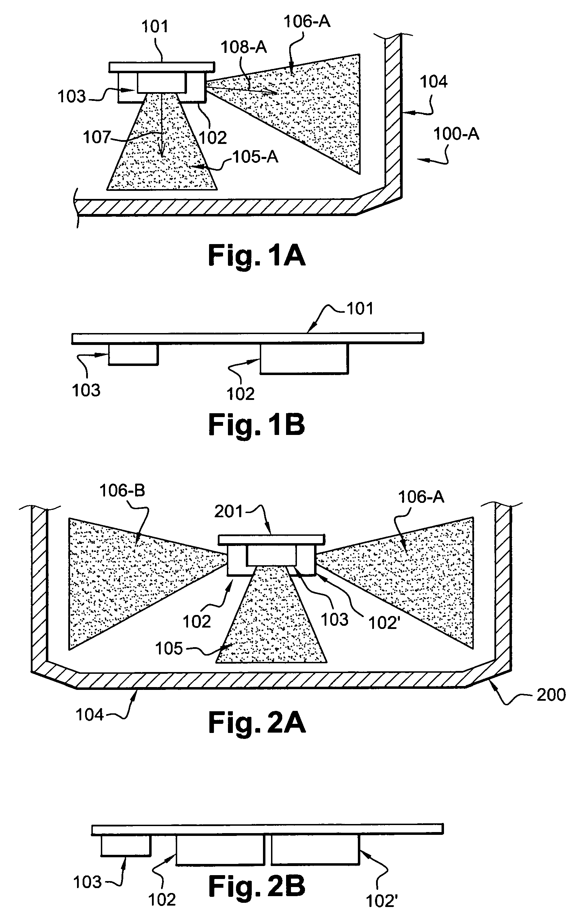

Les figures 1A et 1B montrent, en coupe et de coté, un premier exemple de réalisation d'un dispositif d'éclairage intérieur 100-A non représentatif de l'invention. Le dispositif 100-A comporte notamment une première LED 102 et une deuxième LED 103 placées sur une unique carte de circuit imprimé 101, désignée également comme support ou comme surface du PCB. Un écran de diffusion 104 est représenté ;d'une part, il protège les LEDs 102 et 103 ainsi que leur unique support 101 ;d'autre part, il assure la diffusion des faisceaux lumineux hors du dispositif d'éclairage intérieur 100-A.

Dans l'exemple représenté, ne correspondant pas à l'invention, la LED 103 est à émission axiale : l'intensité maximale d'un faisceau lumineux 105-A qu'elle produit est observé selon une première direction 107, sensiblement perpendiculaire au plan défini par la surface du PCB 101 ;la première direction 107 correspond à la direction principale d'émission de la LED 103 au travers de l'écran de diffusion 104. La LED 102 est à émission latérale : l'intensité maximale d'un faisceau lumineux 106-A qu'elle produit est observé selon une deuxième direction 108-A, dirigée vers la droite, présentant un angle relativement faible, une vingtaine de degrés, par rapport au plan défini par la surface du PCB 101. La deuxième direction 108-A correspond à la direction principale d'émission de la LED 102 au travers de l'écran de diffusion 104. Dans la pratique, on utilise plusieurs LEDs 103 et plusieurs LEDs 102, formant respectivement un premier ensemble de LEDs et un deuxième ensemble de LEDs, pour réaliser respectivement le faisceau lumineux 105-A et 106-A. Par exemple, on dispose huit LEDs 102 et huit LEDs 103 sur une même carte de circuit imprimé. Le fait de disposer l'ensemble des LEDs sur une unique carte de circuit imprimé permet d'économiser de la place et de réduire les coûts de fabrication du dispositif d'éclairage considéré.

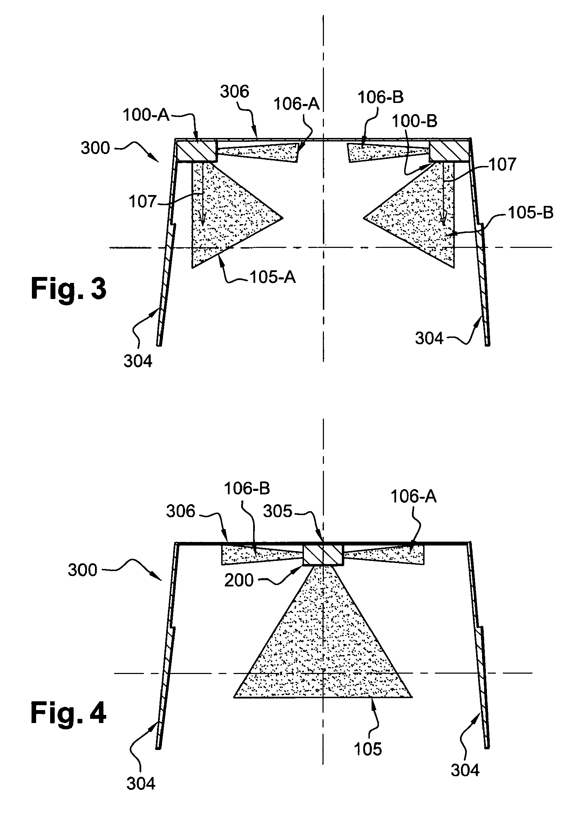

La figure 3 montre une vue en coupe d'un habitacle 300 de véhicule automobile - le plan de coupe étant perpendiculaire au plan défini par des portières 304 dudit véhicule et au plafond 306 de l'habitacle - équipé du dispositif d'éclairage 100-A et d'un deuxième dispositif d'éclairage 100-B symétrique du premier dispositif d'éclairage 100-A. Le premier dispositif 100-A et le deuxième dispositif 100-B sont disposés latéralement dans l'habitacle 300, en étant placé au niveau du plafond 306 au niveau d'une zone de jonction entre les portières présentes d'un même côté de l'habitacle. La seule différence entre le dispositif d'éclairage 100-A et le dispositif d'éclairage 100-B est que le premier dispositif d'éclairage 100-A est caractérisé par une deuxième direction d'éclairage orientée, lorsque le véhicule est regardé de face, vers la droite, direction selon laquelle est émis un faisceau lumineux 106-A, alors que le deuxième dispositif d'éclairage 100-B est caractérisé par une deuxième direction d'éclairage orientée vers la gauche, direction selon laquelle est émis un faisceau lumineux 106-B. Le dispositif 105-B produit par ailleurs un faisceau lumineux 105-B selon la direction 107.

Les dispositifs d'éclairage 100-A et 100-B sont ainsi aptes à réaliser deux fonctions d'éclairage intérieur : la première fonction est réalisée par les LEDs à émission axiale 103; elle consiste ici en un éclairage d'accueil, d'intensité importante, destiné par exemple à l'accueil lorsque le conducteur entre dans son véhicule ou lorsqu'il coupe le moteur. On utilise ici des diodes de couleur blanche. La deuxième fonction est réalisée par les LEDs à émission latérales 102; elle consiste ici en un éclairage du plafond, de faible intensité, destiné par exemple à être utilisé lorsque le conducteur conduit et que des passagers souhaitent disposer d'un léger éclairage d'ambiance. On utilise ici des diodes de couleur rouge.

Dans un exemple ne correspondant pas à l'invention, les LEDs à émission axiale 103 peuvent être divisées en deux sous-ensembles distincts. Lorsqu'un premier sous-ensemble est activé, il réalise une fonction d'éclairage d'ambiance, ou d'éclairage habitacle en conduite, de couleur blanche et de faible intensité ; le deuxième sous-ensemble peut alors être activé, en complément de l'activation du premier sous-ensemble, pour réaliser la fonction d'éclairage d'accueil, toujours de couleur blanche, mais de plus forte intensité.

Dans un exemple particulier la carte de circuit imprimé est reliée par au moins trois fils à un microcontrôleur ; un premier fil consiste en un fil de masse. Un deuxième fil, permettant d'appliquer une tension de 13 volts, contrôle l'activation du premier ensemble de LEDs, alors qu'un troisième fil, permettant également d'appliquer une tension de 13 volts, contrôle l'activation du deuxième ensemble de LEDs. Les différentes fonctions peuvent ainsi être contrôlées de façon indépendante. Elles peuvent être activées simultanément ou séparément.

Les figures 2-A et 2-B montrent un deuxième exemple de réalisation 200 du dispositif d'éclairage intérieur non représentatif de l'invention. La différence entre le deuxième exemple et le premier exemple 100-A qui a été décrit en référence aux figures 1-A et 1-B réside dans le fait que le nombre de LEDs à émission latérales est doublé : désormais, un PCB 201 supporte non seulement les LEDs 102 et 103, mais également un deuxième ensemble de LEDs 102' à émission latérale, dont la direction principale d'émission est opposée à la direction principale d'émission du premier ensemble de LEDs 102 à émission latérale. Le dispositif d'éclairage 200 est ainsi apte à produire, à lui seul, le premier faisceau 106-A, un deuxième faisceau 105 et le troisième faisceau 106-B. Dans un exemple de réalisation particulier, le premier faisceau et le troisième faisceau sont allumés simultanément, réalisant une unique fonction d'éclairage correspondant à un éclairage du plafond, de faible intensité.

Le dispositif d'éclairage 200 est avantageusement placé au centre 305 du plafond 306 de l'habitacle 300, comme montré à la figure 4. Les LEDs à émission axiales 103 produisent alors un faisceau 105 réalisant à lui seul la fonction d'éclairage d'accueil, d'intensité importante.

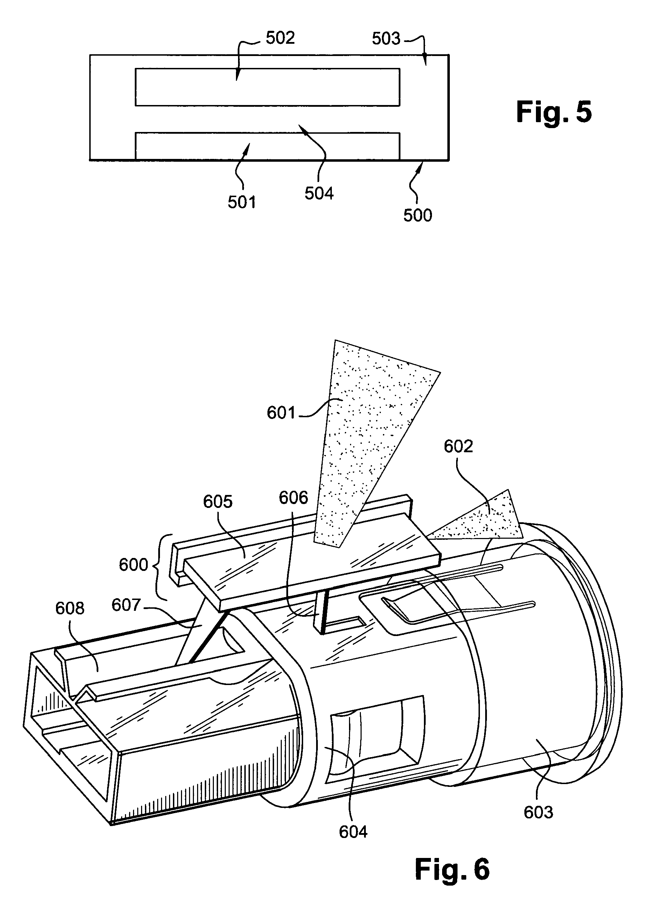

La figure 5 montre une représentation schématique d'un troisième exemple ne correspondant pas à l'invention, d'un dispositif d'éclairage intérieur, présentant notamment une première fonction du type "stop supérieur", ou "feu stop surélevé", ou encore désigné comme fonction CHMSL (Central High Mounted Stop Lamp en anglais), qui est placée sur la partie supérieure de la vitre arrière du véhicule. La première fonction est réalisée au travers d'une première zone diffusante 502 du dispositif 500. Elle est réalisée au moyen de LEDs à émission latérale émettant dans le rouge, dont la direction principale d'émission est orientée vers l'extérieur du véhicule. Le dispositif d'éclairage 500 étant cependant disposé à l'intérieur de l'habitacle, il appartient donc à la catégorie des dispositifs d'éclairage intérieur.

Le dispositif 500 est capable de réaliser une deuxième fonction d'éclairage, par exemple du type éclairage d'accueil. Des LEDs à émission axiale sont utilisées pour cette fonction. A cet effet, il comporte une deuxième zone de diffusion 501 dont la direction principale d'émission est orientée vers le bas lorsque le dispositif 500 est placé dans l'habitacle. Dans cet exemple, le faisceau est d'intensité importante et de couleur blanche.

La première zone de diffusion 502 et la deuxième zone de diffusion sont maintenues par la structure du dispositif 500, réalisée par exemple dans un matériau métallique ou plastique. La structure peut notamment comporter une partie occultante 504 séparant les deux zones de diffusion. Bien que physiquement séparées, les deux zones de diffusion 501 et 502 peuvent être réalisées à partir d'un unique écran de diffusion placé au sein de la structure 503 du dispositif 500.

La figure 6 montre un autre exemple ne correspondant pas à l'invention. Cet exemple montre le dispositif 600 placé en condition d'utilisation. Le dispositif 600 est constitué d'un premier ensemble de diodes, à émission axiale, qui produisent un premier faisceau lumineux 601, destiné à éclairer un cendrier, et un deuxième ensemble de diodes, à émission latérale, qui produisent un deuxième faisceau lumineux 602, destiné à éclairer une bague 603 d'un allume-cigare 604. L'ensemble des LEDs sont disposées sur un unique PCB 605. Dans certains exemples de réalisation de cet exemple, le premier faisceau 601 est transmis vers le cendrier au moyen d'au moins un guide de lumière permettant d'éclairer tout accessoire situé en regard dudit guide de lumière.

Dans l'exemple représenté, le PCB comporte une première patte de contact 606, en contact avec le corps de l'allume-cigare, ce dernier correspondant à un potentiel de référence du véhicule, typiquement 0 Volt. Le PCB comporte par ailleurs une deuxième patte de contact 607 qui entre en contact avec une patte connecteur de l'allume-cigare ;on obtient ainsi, par cet intermédiaire, une tension de valeur 12 volts permettant d'allumer les différents ensembles de LEDs. Dans l'exemple représenté, la patte connecteur est une patte connecteur trois points.

## Revendications

1. Dispositif d'éclairage (100 ;200 ;500) pour véhicule automobile, comportant une pluralité de sources lumineuses (102 ;103) de type diodes électroluminescentes, avec au moins un premier ensemble de diodes électroluminescentes réalisant une première fonction d'éclairage et un deuxième ensemble de diodes électroluminescentes réalisant une deuxième fonction d'éclairage, la pluralité de sources lumineuses étant disposée au sein d'un unique module d'éclairage intérieur (100 ;200 ;500),
**caractérisé en ce que** le premier ensemble de diodes électroluminescentes est constitué de diodes à émission traversante émettant chacune directement un faisceau lumineux dans la direction du faisceau lumineux global de ladite première fonction d'éclairage, et le deuxième ensemble de diodes électroluminescentes est constitué de diodes à émission latérale émettant chacune directement dans la direction du faisceau lumineux global de ladite deuxième fonction d'éclairage, qui est différente de la direction du faisceau lumineux global de ladite première fonction d'éclairage,
**en ce que** le module d'éclairage intérieur comporte une unique carte de circuit imprimé (101 ;201 ;605) sur laquelle sont disposés le premier ensemble de diodes électroluminescentes et le deuxième ensemble de diodes électroluminescentes,
et **en ce que** la première fonction correspond à une fonction d'éclairage habitacle à l'arrêt, et **en ce que** la deuxième fonction correspond à une fonction d'éclairage plafond.

2. Dispositif d'éclairage (100 ;200 ;500) pour véhicule automobile, comportant une pluralité de sources lumineuses (102 ;103) de type diodes électroluminescentes, avec au moins un premier ensemble de diodes électroluminescentes réalisant une première fonction d'éclairage et un deuxième ensemble de diodes électroluminescentes réalisant une deuxième fonction d'éclairage, la pluralité de sources lumineuses étant disposée au sein d'un unique module d'éclairage intérieur (100 ;200 ;500),
**caractérisé en ce que** le premier ensemble de diodes électroluminescentes est constitué de diodes à émission traversante, émettant chacune directement un faisceau lumineux dans la direction du faisceau lumineux global de ladite première fonction d'éclairage, et le deuxième ensemble de diodes électroluminescentes est constitué de diodes à émission latérale émettant chacune directement dans la direction du faisceau lumineux global de ladite deuxième fonction d'éclairage, qui est différente de la direction du faisceau lumineux global de ladite première fonction d'éclairage,
**en ce que** le module d'éclairage intérieur comporte une unique carte de circuit imprimé (101 ;201 ;605) sur laquelle sont disposés le premier ensemble de diodes électroluminescentes et le deuxième ensemble de diodes électroluminescentes,
et **en ce que** la première fonction correspond à une fonction d'éclairage habitacle en conduite, et **en ce que** la deuxième fonction correspond à une fonction d'éclairage plafond.

3. Dispositif d'éclairage (100 ;200 ;500) pour véhicule automobile, comportant une pluralité de sources lumineuses (102 ;103) de type diodes électroluminescentes, avec au moins un premier ensemble de diodes électroluminescentes réalisant une première fonction d'éclairage et un deuxième ensemble de diodes électroluminescentes réalisant une deuxième fonction d'éclairage, la pluralité de sources lumineuses étant disposée au sein d'un unique module d'éclairage intérieur (100 ;200 ;500),
**caractérisé en ce que** le premier ensemble de diodes électroluminescentes est constitué de diodes à émission traversante, émettant chacune directement un faisceau lumineux dans la direction du faisceau lumineux global de ladite première fonction d'éclairage, et le deuxième ensemble de diodes électroluminescentes est constitué de diodes à émission latérale émettant chacune directement dans la direction du faisceau lumineux global de ladite deuxième fonction d'éclairage, qui est différente de la direction du faisceau lumineux global de ladite première fonction d'éclairage,
**en ce que** le module d'éclairage intérieur comporte une unique carte de circuit imprimé (101 ;201 ;605) sur laquelle sont disposés le premier ensemble de diodes électroluminescentes et le deuxième ensemble de diodes électroluminescentes,
et **en ce que** la première fonction correspond à une fonction d'éclairage habitacle en conduite, et **en ce que** la deuxième fonction correspond à une fonction feu stop intérieur surélevé.

4. Dispositif d'éclairage selon l'une au moins des revendications précédentes **caractérisé en ce que** les diodes électroluminescentes du premier ensemble de diodes électroluminescentes émettent un faisceau lumineux d'une première intensité, et **en ce que** les diodes électroluminescentes du deuxième ensemble de diodes électroluminescentes émettent un faisceau lumineux d'une deuxième intensité inférieure à la première intensité.

5. Dispositif d'éclairage selon l'une au moins des revendications précédentes **caractérisé en ce que** les diodes électroluminescentes du premier ensemble de diodes électroluminescentes émettent un faisceau lumineux d'une première couleur, et **en ce que** les diodes électroluminescentes du deuxième ensemble de diodes électroluminescentes émettent un faisceau lumineux d'une deuxième couleur différente de la première couleur.

6. Dispositif d'éclairage selon l'une au moins des revendications précédentes **caractérisé en ce que** le module d'éclairage intérieur comporte un unique écran de diffusion (104) au travers duquel sont diffusés les faisceaux lumineux de la pluralité de source lumineuse.

7. Dispositif d'éclairage selon l'une au moins des revendications précédentes **caractérisé en ce que** le module d'éclairage comporte une surface de diffusion scindée par une partie occultante (504) en au moins une première partie (501) et une deuxième partie (502), la première partie assurant la diffusion de faisceaux lumineux réalisant la première fonction, la deuxième partie assurant la diffusion de faisceaux lumineux réalisant la deuxième fonction.

8. Dispositif d'éclairage selon l'une au moins des revendications précédentes **caractérisé en ce que** la première fonction et la deuxième fonction sont activées simultanément.

9. Dispositif d'éclairage selon l'une au moins des revendications 1 à 7 **caractérisé en ce que** la première fonction et la deuxième fonction sont activées de manière alternée.

10. Véhicule automobile équipé d'au moins un dispositif d'éclairage selon l'une au moins des revendications précédentes, le dispositif d'éclairage étant disposé dans une partie centrale du plafond de l'habitacle du véhicule.

11. Véhicule automobile équipé d'au moins un dispositif d'éclairage selon l'une au moins des revendications précédentes, le dispositif d'éclairage étant disposé au moins d'un côté de l'habitacle du véhicule.

## Patentansprüche

1. Beleuchtungsvorrichtung (100; 200; 500) für Kraftfahrzeuge mit einer Mehrzahl von Lichtquellen (102; 103) vom Typ Leuchtdioden, wobei wenigstens eine erste Leuchtdiodeneinheit eine erste Beleuchtungsfunktion ausführt und eine zweite Leuchtdiodeneinheit eine zweite Beleuchtungsfunktion ausführt, wobei die Mehrzahl von Lichtquellen innerhalb einer einzigen Innenraumbeleuchtungseinheit (100; 200; 500) angeordnet ist,
**dadurch gekennzeichnet, dass** die erste Leuchtdiodeneinheit von Dioden mit durchquerender Abstrahlung gebildet ist, die jeweils unmittelbar ein Lichtbündel in Richtung des Gesamtlichtbündels der ersten Beleuchtungsfunktion emittieren, und die zweite Leuchtdiodeneinheit von Dioden mit seitlicher Abstrahlung gebildet ist, die jeweils unmittelbar in Richtung des Gesamtlichtbündels der zweiten Beleuchtungsfunktion Licht emittieren, die sich von der Richtung des Gesamtlichtbündels der ersten Beleuchtungsfunktion unterscheidet,
dass die Innenraumbeleuchtungseinheit eine einzige Leiterplatte (101; 201, 605) umfasst, auf der die erste Leuchtdiodeneinheit und die zweite Leuchtdiodeneinheit angeordnet sind,
und dass die erste Funktion einer Fahrzeuginnenraumbeleuchtungsfunktion bei Stillstand des Fahrzeugs entspricht, und dass die zweite Funktion einer Deckenbeleuchtungsfunktion entspricht.

2. Beleuchtungsvorrichtung (100; 200; 500) für Kraftfahrzeuge mit einer Mehrzahl von Lichtquellen (102; 103) vom Typ Leuchtdioden, wobei wenigstens eine erste Leuchtdiodeneinheit eine erste Beleuchtungsfunktion ausführt und eine zweite Leuchtdiodeneinheit eine zweite Beleuchtungsfunktion ausführt, wobei die Mehrzahl von Lichtquellen innerhalb einer einzigen Innenraumbeleuchtungseinheit (100; 200; 500) angeordnet ist,
**dadurch gekennzeichnet, dass** die ersten Leuchtdiodeneinheit von Dioden mit durchquerender Abstrahlung gebildet ist, die jeweils unmittelbar ein Lichtbündel in Richtung des Gesamtlichtbündels der ersten Beleuchtungsfunktion emittieren, und die zweite Leuchtdiodeneinheit von Dioden mit seitlicher Abstrahlung gebildet ist, die jeweils unmittelbar in Richtung des Gesamtlichtbündels der zweiten Beleuchtungsfunktion Licht emittieren, die sich von der Richtung des Gesamtlichtbündels der ersten Beleuchtungsfunktion unterscheidet,
dass die Innenraumbeleuchtungseinheit eine einzige Leiterplatte (101; 201, 605) umfasst, auf der die erste Leuchtdiodeneinheit und die zweite Leuchtdiodeneinheit angeordnet sind,
und dass die erste Funktion einer Fahrzeuginnenraumbeleuchtungsfunktion bei Fahrbetrieb des Fahrzeugs entspricht, und dass die zweite Funktion einer Deckenbeleuchtungsfunktion entspricht.

3. Beleuchtungsvorrichtung (100; 200; 500) für Kraftfahrzeuge mit einer Mehrzahl von Lichtquellen (102; 103) vom Typ Leuchtdioden, wobei wenigstens eine erste Leuchtdiodeneinheit eine erste Beleuchtungsfunktion ausführt und eine zweite Leuchtdiodeneinheit eine zweite Beleuchtungsfunktion ausführt, wobei die Mehrzahl von Lichtquellen innerhalb einer einzigen Innenraumbeleuchtungseinheit (100; 200; 500) angeordnet ist,
**dadurch gekennzeichnet, dass** die ersten Leuchtdiodeneinheit von Dioden mit durchquerender Abstrahlung gebildet ist, die jeweils unmittelbar ein Lichtbündel in Richtung des Gesamtlichtbündels der ersten Beleuchtungsfunktion emittieren, und die zweite Leuchtdiodeneinheit von Dioden mit seitlicher Abstrahlung gebildet ist, die jeweils unmittelbar in Richtung des Gesamtlichtbündels der zweiten Beleuchtungsfunktion Licht emittieren, die sich von der Richtung des Gesamtlichtbündels der ersten Beleuchtungsfunktion unterscheidet,
dass die Innenraumbeleuchtungseinheit eine einzige Leiterplatte (101; 201, 605) umfasst, auf der die erste Leuchtdiodeneinheit und die zweite Leuchtdiodeneinheit angeordnet sind,
und dass die erste Funktion einer Fahrzeuginnenraumbeleuchtungsfunktion bei Fahrbetrieb des Fahrzeugs entspricht, und dass die zweite Funktion einer im Innenraum befindlichen, hochgesetzten Bremslichtfunktion entspricht.

4. Beleuchtungsvorrichtung nach wenigstens einem der vorhergehenden Ansprüche,
**dadurch gekennzeichnet, dass** die Leuchtdioden der ersten Leuchtdiodeneinheit ein Lichtbündel mit einer ersten Lichtstärke emittieren und dass die Leuchtdioden der zweiten Leuchtdiodeneinheit ein Lichtbündel mit einer zweiten Lichtstärke emittieren, die schwächer als die erste Lichtstärke ist.

5. Beleuchtungsvorrichtung nach wenigstens einem der vorhergehenden Ansprüche,
**dadurch gekennzeichnet, dass** die Leuchtdioden der ersten Leuchtdiodeneinheit ein Lichtbündel mit einer ersten Farbe emittieren und dass die Leuchtdioden der zweiten Leuchtdiodeneinheit ein Lichtbündel mit einer zweiten Farbe emittieren, die sich von der ersten Farbe unterscheidet.

6. Beleuchtungsvorrichtung nach wenigstens einem der vorhergehenden Ansprüche,
**dadurch gekennzeichnet, dass** die Innenraumbeleuchtungseinheit einen einzigen Streuschirm (104) aufweist, durch den hindurch die Lichtstrahlen der Mehrzahl von Lichtquellen gestreut werden.

7. Beleuchtungsvorrichtung nach wenigstens einem der vorhergehenden Ansprüche,
**dadurch gekennzeichnet, dass** die Beleuchtungseinheit eine lichtstreuende Oberfläche aufweist, die durch ein abschattendes Teil (504) in wenigstens einen ersten Abschnitt (501) und einen zweiten Abschnitt (502) unterteilt ist, wobei der erste Abschnitt die Streuung von Lichtbündeln gewährleistet, die die erste Funktion ausführen, und wobei der zweite Abschnitt die Streuung von Lichtbündeln gewährleistet, die die zweite Funktion ausführen.

8. Beleuchtungsvorrichtung nach wenigstens einem der vorhergehenden Ansprüche,
**dadurch gekennzeichnet, dass** die erste Funktion und die zweite Funktion gleichzeitig aktiviert werden.

9. Beleuchtungsvorrichtung nach wenigstens einem der Ansprüche 1 bis 7, **dadurch gekennzeichnet, dass** die erste Funktion und die zweite Funktion abwechselnd aktiviert werden.

10. Kraftfahrzeug, ausgestattet mit wenigstens einer Beleuchtungsvorrichtung nach wenigstens einem der vorhergehenden Ansprüche, wobei die Beleuchtungsvorrichtung in einem mittleren Teil des Himmels des Fahrzeuginnenraums angeordnet ist.

11. Kraftfahrzeug, ausgestattet mit wenigstens einer Beleuchtungsvorrichtung nach wenigstens einem der vorhergehenden Ansprüche, wobei die Beleuchtungsvorrichtung wenigstens auf einer Seite des Fahrzeuginnenraums angeordnet ist.

## Claims

1. Lighting device (100; 200; 500) for a motor vehicle, comprising a plurality of sources of light (102; 103) of the light-emitting diode type, with at least a first series of light-emitting diodes which provide a first lighting function and a second series of light-emitting diodes which provide a second lighting function, the plurality of sources of light being arranged inside a single interior lighting module (100; 200; 500), **characterised in that** the first series of light-emitting diodes is constituted by reverse gullwing diodes which each emit a light beam directly in the direction of the global light beam of the said first lighting function, and the second series of light-emitting diodes is constituted by lateral emission diodes which each emit directly in the direction of the global light beam of the said second lighting function, which is different from the direction of the global light beam of the said first lighting function, **in that** the interior lighting module comprises a single printed circuit board (101; 201; 605) on which there are arranged the first series of light-emitting diodes and the second series of light-emitting diodes,
and **in that** the first function corresponds to a function of passenger space lighting when at a standstill, and **in that** the second function corresponds to a ceiling lighting function.

2. Lighting device (100; 200; 500) for a motor vehicle, comprising a plurality of sources of light (102; 103) of the light-emitting diode type, with at least a first series of light-emitting diodes which provide a first lighting function and a second series of light-emitting diodes which provide a second lighting function, the plurality of sources of light being arranged inside a single interior lighting module (100; 200; 500), **characterised in that** the first series of light-emitting diodes is constituted by reverse gullwing diodes which each emit a light beam directly in the direction of the global light beam of the said first lighting function, and the second series of light-emitting diodes is constituted by lateral emission diodes which each emit directly in the direction of the global light beam of the said second lighting function, which is different from the direction of the global light beam of the said first lighting function, **in that** the interior lighting module comprises a single printed circuit board (101; 201; 605) on which there are arranged the first series of light-emitting diodes and the second series of light-emitting diodes,
and **in that** the first function corresponds to a function of passenger space lighting when driving, and **in that** the second function corresponds to a ceiling lighting function.

3. Lighting device (100; 200; 500) for a motor vehicle, comprising a plurality of sources of light (102; 103) of the light-emitting diode type, with at least a first series of light-emitting diodes which provide a first lighting function and a second series of light-emitting diodes which provide a second lighting function, the plurality of sources of light being arranged inside a single interior lighting module (100; 200; 500), **characterised in that** the first series of light-emitting diodes is constituted by reverse gullwing diodes which each emit a light beam directly in the direction of the global light beam of the said first lighting function, and the second series of light-emitting diodes is constituted by lateral emission diodes which each emit directly in the direction of the global light beam of the said second lighting function, which is different from the direction of the global light beam of the said first lighting function, **in that** the interior lighting module comprises a single printed circuit board (101; 201; 605) on which there are arranged the first series of light-emitting diodes and the second series of light-emitting diodes,
and **in that** the first function corresponds to a function of passenger space lighting when driving, and **in that** the second function corresponds to a raised interior stop light function.

4. Lighting device according to at least one of the preceding claims, **characterised in that** the light-emitting diodes of the first series of light-emitting diodes emit a light beam with a first intensity, and **in that** the light-emitting diodes of the second series of light-emitting diodes emit a light beam with a second intensity, which is lower than the first intensity.

5. Lighting device according to at least one of the preceding claims, **characterised in that** the light-emitting diodes of the first series of light-emitting diodes emit a light beam with a first colour, and **in that** the light-emitting diodes of the second series of light-emitting diodes emit a light beam with a second colour, which is different from the first colour.

6. Lighting device according to at least one of the preceding claims, **characterised in that** the interior lighting module comprises a single diffusion screen (104) through which the light beams of the plurality of sources of light are diffused.

7. Lighting device according to at least one of the preceding claims, **characterised in that** the lighting module comprises a diffusion surface which is divided by a first shielding part (504) into at least a first part (501) and a second part (502), the first part ensuring the diffusion of light beams which carry out the first function, and the second part ensuring the diffusion of light beams which carry out the second function.

8. Lighting device according to at least one of the preceding claims, **characterised in that** the first function and the second function are activated simultaneously.

9. Lighting device according to at least one of claims 1 to 7, **characterised in that** the first function and the second function are activated alternately.

10. Motor vehicle equipped with at least one lighting device according to at least one of the preceding claims, the lighting device being arranged in a central part of the ceiling of the passenger space of the vehicle.

11. Motor vehicle equipped with at least one lighting device according to at least one of the preceding claims, the lighting device being arranged on at least one side of the passenger space of the vehicle.
